# EUROPEAN PATENT SPECIFICATION

(11) **EP 1 998 986 B1**
(45) Date of publication and mention of the grant of the patent: **01.02.2012**
(21) Application number: 07711924.6
(22) Date of filing: 13.03.2007
(51) Int. Cl.: B60S 1/38

(54) **WIPER BLADE FOR A WIPER AND METHOD FOR MANUFACTURING THE SAME**
WISCHERBLATT FÜR SCHEIBENWISCHER UND HERSTELLUNGSVERFAHREN DAFÜR
BALAI D'ESSUIE-GLACE POUR UN ESSUIE-GLACE ET PROCEDE DE FABRICATION

(30) Priority: 24.03.2006 DE 102006013710
(43) Date of publication of application: 10.12.2008
(73) Proprietor: L'Air Liquide Société Anonyme pour l'Etude et l'Exploitation des Procédés Georges Claude, 75007 Paris (FR); Air Liquide Deutschland GmbH, 40235 Düsseldorf (DE)
(72) Inventor: VAN BONN, Rolf, 47269 Duisburg (DE); BARBE, Joachim, 47918 Tönisvorst (DE)
(74) Representative: Mellul-Bendelac, Sylvie Lisette
(86) International application number: PCT/EP2007/002180
(87) International publication number: WO 2007/110151

(56) References cited:
- JP-A- 5 097 015
- US-A- 5 041 304
- US-A- 5 478 605
- US-A- 5 549 935

## Description

The present invention relates to wiper blades for windscreen wipers. The wiper blades according to the invention are distinguished in that, owing to a fluorination process, they have improved surface properties in comparison with conventional wiper blades.

According to the prior art, either wiper blades formed from plastic and without surface modification were used or wiper blades the surface of which was modified by a chlorine treatment were used. A certain reduction in the coefficient of friction could be achieved thereby. However, these reduced coefficients of friction, too, are no longer sufficient for meeting the present day requirements with regard to wiper blades.

The following documents are illustrative of this wiper blades field : US-5 478 605, JP-05097015 and US-5 549 935.

Starting from this, it is therefore the object of this invention to provide a wiper blade improved in comparison with the prior art .

These objects are achieved by the features of the independent claims 1, and advantageous further developments form the subject-matter of the respective dependent claims.

A wiper blade according to the invention for a windscreen wiper comprises at least:
- a connecting member for connecting the wiper blade to a wiper blade holder and
- a wiping lip having two longitudinal sides and an upper edge connected to the connecting member and an underside which in operation is driven over a smooth surface.

The underside of the wiping lip is formed opposite the connecting member. According to the invention, at least the wiping lip has, at least partly, a fluorinated surface.

A windscreen wiper is understood as meaning a device for cleaning a windscreen, in particular a windscreen of a motor vehicle, aircraft, ship or railway vehicle. The windscreen wiper consists of a wiper arm on which a wiper blade holder is formed. This wiper blade holder is connected to a connecting member of a wiper blade. The windscreen wiper is operated in such a way that, in operation, the wiper blade travels over the corresponding windscreen following a path similar to the segment of a circle or along a linear path and removes liquid present on the windscreen from the latter. Here, the wiper blade is driven with a part of a wiping lip, in particular with a wiping edge formed between a longitudinal side and the underside, over the windscreen.

The wiper blade is usually formed in such a way that at least the wiping lip is formed from an elastomeric substance. This may be a natural rubber or an organic plastic.

Owing to the fluorinated surface of at least the wiping lip, the coefficients of friction in this region are improved in comparison with unfluorinated and also with chlorinated materials. This is because at least some of the corresponding functional hydrocarbon groups on the surface of the elastomeric substance are replaced by fluorocarbon groups and these reduce the coefficient of friction of the surface. Because the coefficients of friction are greatly reduced in comparison with conventional wiper blades and also with chlorinated wiper blades, a substantially improved wiping result can be achieved with the use of the wiper blade. At the same time, a motor moving the windscreen wiper can be made smaller so that less power has to be applied for moving the wiper blades over the windscreen. The durability of such a wiper blade is also disproportionately increased in comparison with conventional wiper blades.

According to an advantageous further development of the wiper blade according to the invention, the underside of the wiping lip is unfluorinated.

Because of the unfluorinated underside of the wiping lip, a region whose coefficient of friction greatly differs locally from that of the longitudinal sides of the wiping lip in its fluorinated regions is present here. In normal operation of the wiper blade, the underside comes into contact with the smooth surface to he cleaned, for example of a windscreen, only at the points of reversal of the movement of the wiper blade. This is therefore the case, for example, when the windscreen wiper changes from a movement to the left to a movement to the right. This change of direction of the movement of the windscreen wiper and hence also of the wiper blade results in the longitudinal sides of the wiping lip being driven in each case alternately over the surface in one movement in one direction. Owing to the unfluorinated underside which is present between these longitudinal sides of the wiping lip, there is a very rapid change of direction in this region since the friction on the underside is so greatly increased that folding over of the wiping lip takes place particularly rapidly here. It is for this reason that wiper blades formed according to the invention have the major advantage that a very good cleaning effect of the windscreen by the preferably completely fluorinated longitudinal sides of the wiping lip and very fast direction change behaviour on change of the direction of movement of the wiper blade are present. These together lead to an effectiveness of cleaning of the windscreen by the wiper blades according to the invention which is substantially improved in comparison with wiper blades known from the prior art.

In a further advantageous development of the wiper blade according to the invention, the connecting member is fluorinated.

A fluorinated connecting member means that here too there is a reduction in the coefficient of friction in comparison with wiper blades known from the prior art. This facilitates the mounting of the wiper blades, i.e. the connection of the wiper blade to the wiper blade holder, in comparison with customary conventional wiper blades.

According to a further advantageous development of the wiper blade according to the invention, at least one longitudinal side of the wiping lip is fluorinated.

A formation of the wiper blade in which both longitudinal sides of the wiping lip have a completely fluorinated surface is preferred here. This advantageously improves the effectiveness of the cleaning of the surface to be cleaned and reduces the power to be applied for moving the wiper blade.

According to a further advantageous development of the wiper blade according to the invention, the fluorinated regions of the surface of the wiper blade have a fluorine density of 150 µg/cm² to 250 µg/cm².

The fluorine density is determined in particular by elemental analysis, as can be carried out, for example, using a fluoride analyser, model 9000F, from Antek, Neuss, Germany. Particularly advantageous here is a fluorine density of substantially 200 µg/cm². Such a fluorine density, which is also referred to as fluorine occupation, has proved to be particularly advantageous in tests with fluorinated wiper blades. These wiper blades were very simple to manufacture, had high cleaning effectiveness in combination with good sliding properties and were hard-wearing.

According to the invention, the fluorinated regions have fluorine to a depth of 5 nm (nanometres) to 15 nm.

The depth to which fluorine is present in the fluorinated region is referred to as fluorine penetration depth. This can be determined in particular by investigating corresponding sections of the fluorinated wiper blade by means of scanning electron microscopy.

According to a further advantageous development of the wiper blade according to the invention, the wiper blade comprises at least one of the following substances:
a) ethylene-propylene-diene rubber (EPDM);
b) styrene-butadiene rubber (SBR);
c) a polymer;
d) a crosslinked polymer; and
e) a hydrogenated nitrile-butadiene rubber (HNBR).

These plastics have proved to be particularly advantageous in the manufacture of wiper blades. In particular, blends of at least two of these substances a) to e) are also possible and are according to the invention.

According to a further aspect of the present invention, a method for manufacturing wiper blades from a material comprising at least one plastic is proposed. The method comprises the following steps:
- extrusion of a first and of a second wiper blade from the material, each of the wiper blades comprising
   - a connecting member for connecting the wiper blade to a wiper blade holder and
   - a wiping lip having two longitudinal sides and an upper edge connected to the connecting member and an underside which in operation is driven over a smooth surface.

The first and the second wiper blade are connected to one another at the undersides. According to the invention, the first and the second wiper blade are exposed to a fluorine-containing gas mixture for a contact time and then the first and the second wiper blade are separated from one another at the undersides of the wiping lips.

The method for carrying out the wiper blade according to the invention has the advantage that, by means of this procedure, the respective undersides of the wiping lips of the first and of the second wiper blade are not fluorinated since they are separated from one another only after the fluorination. Consequently, a wiper blade manufactured according to the invention has the abovementioned advantages, namely that the underside of the wiping lip is not fluorinated while the longitudinal sides of the wiping lip are fluorinated. In operation, the wiping lip is driven over the windscreen with a wiping edge formed between the longitudinal side and underside. This wiping edge is fluorinated. This leads to particularly effective cleaning behaviour owing to the fluorinated longitudinal sides and wiping edges and simultaneously to a rapid change of direction of the wiper blades on change of wiping direction. Owing to the substantially reduced coefficients of friction of the longitudinal sides and wiping edges of the wiping lips, the motor driving the windscreen wiper can, with at least the same wiping effectiveness, particularly advantageously be designed with a lower power than for operation of conventional wiper blades known from the prior art. This simultaneously leads to a further miniaturization of the respective drives and hence to a lighter vehicle.

According to an advantageous development of the method, the fluorine-containing gas mixture comprises 0.1 to 20% by volume of fluorine.

Greater proportions of fluorine usually cannot be used since the fluorination reaction takes place too rapidly from these proportions of fluorine and moreover modification and damage to the surface of the windscreen wipers may occur. Proportions of fluorine of 1 to 10% by volume have proved to be particularly advantageous.

According to a further advantageous development of the method, the remainder of the gas mixture substantially comprises nitrogen.

This is to be understood as meaning in particular that the proportion of other substances in the gas mixture is less than 20 ppm (parts per million). Such a high purity of the gas mixture advantageously prevents the probability that secondary reactions take place which may lead to an undesired modification of the surface.

According to a further advantageous development of the method, evacuation of the environment of the wiper blades is first effected after extrusion of the first and of the second wiper blade.

This advantageously prevents an oxofluorination, i.e. a fluorination of the surface of simultaneous oxidation of the functional groups present there. This has proved not to be advantageous for reducing the coefficients of friction in the case of wiper blades. Evacuation is understood in the context of this invention as meaning a reduction of the pressure to 10 mbar (millibar) or less. Evacuation to a pressure of 2 mbar or less has proved to be particularly advantageous here.

According to a further advantageous development of the method, the fluorine-containing gas mixture has a contact pressure of 300 to 800 mbar in the contact time.

The action of a fluorine-containing gas mixture at less than atmospheric pressure has proved to be particularly advantageous in that emergence of the fluorine-containing gas mixture into the environment can be avoided with considerable certainty via the reduced pressure in the treatment chamber. Owing to the very great effort which has to be made when pressures above atmospheric pressure are to be applied, the action at a contact pressure of less than atmospheric pressure and in particular in the range from 300 to 800 mbar is therefore particularly preferred.

According to a further advantageous development of the method, the first and the second wiper blade are exposed to a fluorine-containing gas mixture for a plurality of contact times, evacuation of the environment of the wiper blades being effected between the contact times.

Through the advantageous further development of the present invention, it is possible to achieve even relatively high surface densities of fluorine on the surface of the wiper blades without the concentration of fluorine being so high that damage to the wiper blades occurs in the course of the reaction with the fluorine. Furthermore, it is possible to dispense with fluorination at a pressure above atmospheric pressure. Such methods have proved to be particularly advantageous if a relatively large number of wiper blades are fluorinated simultaneously. Owing to the high fluorine demand, a very high proportion of fluorine in the treatment gas would then be necessary, which can be avoided by the so-called multistage method in a particularly advantageous manner.

According to a further advantageous development of the method, the contact pressure increases monotonically during the contact time.

It has surprisingly been found that a high fluorine concentration particularly at the beginning of the fluorination leads to damage of the surface of the wiper blades. This can be avoided in a particularly advantageous manner by adjusting the contact pressure to increase monotonically over the contact time. Here, monotonically increasing means that, for a relatively long time, the contact pressure during the contact time is always at least just as great as the pressure at an earlier time. Here, the contact pressure may increase abruptly or may be increased in a strictly monotonic manner.

Gradients of the contact pressure of 15 mbar/min to 25 mbar/min and in particular of 20 mbar/min and 22.5 mbar/min have proved to be particularly advantageous here.

According to a further advantageous development of the method, the contact time is at least one hour. Contact times of one hour, one and a half hours, two hours or even four hours have proved to be particularly advantageous.

According to a further advantageous development of the method the wiper blade is formed from at least one of the following substances:
a) ethylene-propylene-diene rubber (EPDM);
b) styrene-butadiene rubber (SBR);
c) a polymer;
d) a crosslinked polymer; and
e) a hydrogenated nitrile-butadiene rubber (HNBR).

Particularly these substances individually or as a mixture of at least two of the substances have or has proved to be particularly advantageous for the formation of effectively operating and long-lasting wiper blades.

The details and advantages disclosed within the scope of this invention for a wiper blade according to the invention can be used and applied in the same manner to the method according to the invention, and vice versa. Below, a wiper blade according to the invention and the method according to the invention are explained in more detail with reference to the attached figures without the invention being limited to the details and advantages disclosed there.
- Fig. 1: schematically shows a working example of a wiper blade according to the invention;
- Fig. 2: schematically shows two wiper blades manufactured by the method according to the invention, in side view; and
- Fig. 3: shows two wiper blades manufactured according to the invention before the separation in section.

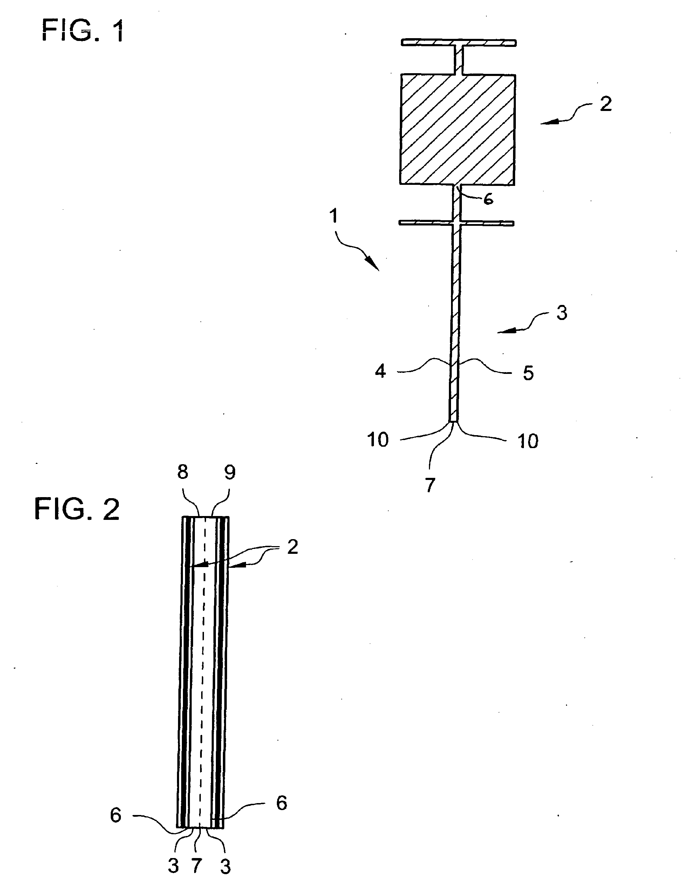

Fig. 1 schematically shows a wiper blade 1 according to the invention in cross section. This comprises a connecting member 2 for connecting the wiper blade 1 to a wiper blade holder - not shown and preferably formed at least partly in a corresponding manner - and a wiping lip 3 having a first 4 and a second longitudinal side 5, an upper edge 6 connected to the connecting member 2 and an underside 7.

In operation, the wiping lip 3 is driven, in particular with one of the wiping edges 10 located between the longitudinal sides 4, 5 and the underside 7, over a smooth surface, in particular a pane of a window. The connecting member 2 is connected to the wiping lip 3, and the underside 7 is formed on the wiping lip 3, in particular opposite the connecting member 2. In the present working example, the first longitudinal side 4 and the second longitudinal side 5 of the wiping lip 3 are formed in such a way that they have a fluorinated surface. This means in particular that some of the functional groups of the material in this region have fluorine atoms. This means that at least some of the hydrogen atoms of these functional groups were replaced by fluorine. In the present working example, the connecting member 2 is also fluorinated.

The fluorinated design of the longitudinal sides 4, 5 of the wiping lip 3 leads in a particularly advantageous manner to very low-frictional operation of the wiper blade since, in this region, the coefficients of friction are reduced in comparison with unfluorinated or chlorinated wiper blades. As a result of this, a motor dimensioned to have lower power can be used as a drive for the windscreen wiper, which leads to cost savings and space savings. Furthermore, the fluorination of the longitudinal sides 4, 5 of the wiping lid 3 leads to longer durability since, owing to the reduced friction between the longitudinal sides 4, 5 of the wiping lip, the abrasion is significantly reduced.

It is particularly advantageous that the underside 7 of the wiping lip 3 is unfluorinated. As a result of this, the change of direction takes place very rapidly during operation of the windscreen wiper on change of direction of the movement of the windscreen wiper, since the folding over of the first longitudinal side 4 to the second longitudinal side 5 and vice versa on change of direction takes place more rapidly than in the case of wiper blades known from the prior art as a result of the increased coefficients of friction on the underside 7 of the wiping lip 3. The fluorination of the connecting member 2 facilitates the connection of the wiper blade 1 to a wiper blade holder which is not shown. The connection between wiper blade 1 and wiper blade holder is particularly advantageously effected in a nonpositive, interlocking and/or integral manner.

Fig. 2 schematically shows two wiper blades manufactured by the method according to the invention. These are a first wiper blade 8 and a second wiper blade 9. These are extruded from a material, in particular extruded and then cut to length. Each of the wiper blades 8, 9 has a connecting member 2 connecting the wiper blade 8, 9 to a wiper blade holder which is not shown. Each wiper blade 8, 9 furthermore has a wiping lip, which wiping lips are each connected to an upper edge 6 on the corresponding connecting member 2. The two wiper blades 8, 9 have an underside 7 which is still common after extrusion and which is the parting line along which the two wiper blades 8, 9 will subsequently be separated from one another. This subsequent underside 7 is shown as a dashed line. The first 8 and the second wiper blade 9 are therefore still connected to one another at the underside 7 at this time and are separated from one another subsequently. The first 8 and the second wiper blade 9 are exposed to a fluorine-containing gas mixture for a contact time and then separated from one another. This is effected in particular by cutting along the dashed line.

Before the separation, the fluorination of the wiper blades 8, 9 is effected. A stepwise fluorination is possible here. Thus, for example, the necessary occupation of the longitudinal sides 4, 5 of the wiping lip with fluorine is calculated and, starting from this, the required treatment gas volume is determined. It is preferential to fluorinate at a pressure below atmospheric pressure since more complicated apparatus for the formation of a pressure-tight chamber can then be avoided. Depending on the amount of fluorine required, the required or calculated fluorine concentration in the fluorine-containing gas mixture may be above a critical limit, which is to be assumed to be substantially about 20% by volume of fluorine. During treatment with a fluorine-containing gas mixture above this limit, damage to the surface of the wiper blades to be treated, in some cases serious damage may occur, so that stepwise fluorination in which the wiper blades are exposed to the fluorine-containing gas mixture for a plurality of contact times at pressures below atmospheric pressure, interrupted by evacuations, is advantageous here. It has been found that, for example the following parameters are advantageous here:

First, an evacuation to a pressure of less than 10 mbar and thereafter flooding with fluorine mixture having a proportion of 10% by volume of fluorine, the remainder being nitrogen, to a contact pressure of 750 mbar are effected. Thereafter, the fluorine-containing gas mixture was given an opportunity to react during a contact time of about one hour. This is followed by further evacuation and further flooding with the fluorine-containing gas mixture to 750 mbar. The subsequent contact time was one and a half hours. This was followed by further evacuation and subsequent flooding with the fluorine-containing gas mixture to a contact pressure of 750 mbar. The contact time was one and a half hours.

Alternatively or additionally, continuous metering of the fluorine-containing gas mixture during the fluorination can be effected. In principle, a non-stepwise fluorination is also possible, advantageous and according to the invention. The following experimental parameters have proved to be particularly advantageous here:
- contact temperature 50°C, 10% by volume of fluorine in 90% by volume of nitrogen, contact pressure 300 mbar absolute, duration of contact two hours, pressure gradient until reaching the contact pressure about 20 mbar/min;
- contact temperature 50°C, 10% by volume of fluorine in 90% by volume of nitrogen as the fluorine-containing gas mixture, contact pressure 400 mbar absolute, contact time 4 hours, pressure gradient until reaching the contact pressure 20 mbar/min; and
- contact temperature 65°C; 10% by volume of fluorine and 90% by volume of nitrogen as the fluorine-containing gas mixture, contact pressure 450 mbar absolute, contact time 4 hours, pressure gradient until reaching the contact pressure 22.5 mbar/min.

The experimental parameters described here have led in a particularly advantageous manner to very good reductions in the coefficient of friction in the region of the longitudinal sides 4, 5 of the wiper blades 1, 8, 9.

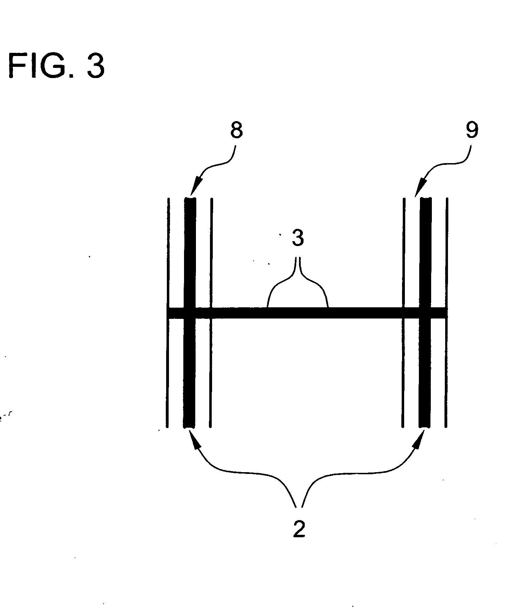

Fig. 3 schematically shows the first 8 and the second wiper blade 9 after extrusion and fluorination and before separation of the wiper blades 8, 9 from one another along the underside 7 in cross section. Here too, the connecting members 2 and the wiping lips 3 can be seen.

The wiper blade according to the invention permits an effective wiping result in the case of relatively small drive motors to be used for driving the windscreen wipers. In comparison with conventional wiper blades, the required driving power can thus be substantially reduced. The method according to the invention for manufacturing wiper blades 1 according to the invention advantageously permits the simple manufacture of wiper blades 1 according to the invention. That the underside 7 of the respective wiper blades is unfluorinated has proved to be particularly advantageous, which leads to a very rapid change of direction of the wiper blade on change of direction of the windscreen wiper.

### List of reference numerals

- 1: Wiper blade
- 2: Connecting member
- 3: Wiping lip
- 4: First longitudinal side
- 5: Second longitudinal side
- 6: Upper edge
- 7: Underside
- 8: First wiper blade
- 9: Second wiper blade
- 10: Wiping edge

## Claims

1. Wiper blade (1) for a windscreen wiper, at least comprising:
- a connecting member (2) for connecting the wiper blade (1) to a wiper blade holder and
- a wiping lip (3) having two longitudinal sides (4, 5) and an upper edge (6) connected to the connecting member (2) and an underside (7) which in operation is driven over a smooth surface,
the underside (7) of the wiping lip (3) being formed opposite the connecting member (2), **characterized in that** at least the wiping lip (3) has, at least partly, a fluorinated surface, the fluorinated regions having fluorine to a depth of 5 nm to 15 nm.

2. Wiper blade (1) according to Claim 1, in which the underside (7) of the wiping lip (3) is unfluorinated.

3. Wiper blade (1) according to Claim 1 or 2, in which the connecting member (2) is fluorinated.

4. Wiper blade (1) according to any of the preceding claims, in which at least one longitudinal side (4, 5) of the wiping lip (3) is fluorinated, and preferentially both longitudinal sides (4, 5) of the wiping lip (3) are fluorinated.

5. Wiper blade (1) according to any of the preceding claims, in which the fluorinated regions of the surface of the wiper blade (1) have a fluorine density of 150 µg/cm² (microgram per square centimetre) to 250 µg/cm².

6. Wiper blade (1) according to any of the preceding claims, comprising at least one of the following substances:
a) ethylene-propylene-diene rubber (EPDM);
b) styrene-butadiene rubber (SBR);
c) a polymer;
d) a crosslinked polymer; and
e) a hydrogenated nitrile-butadiene rubber (HNBR).

## Patentansprüche

1. Wischerblatt (1) für einen Scheibenwischer, mindestens umfassend:
- ein Verbindungselement (2) zum Verbinden des Wischerblatts (1) mit einem Wischerblatthalter und
- eine Wischlippe (3) mit zwei Längsseiten (4, 5), einer Oberkante (6), die mit dem Verbindungselement (2) verbunden ist, und einer Unterseite (7), die in Betrieb über ein glatte Oberfläche geführt wird,
wobei die Unterseite (7) der Wischlippe (3) gegenüber dem Verbindungselement (2) ausgebildet ist, **dadurch gekennzeichnet, dass** zumindest die Wischlippe (3) mindestens teilweise eine fluorierte Oberfläche aufweist, wobei die fluorierten Bereiche Fluor bis in eine Tiefe von 5 nm bis 15 nm aufweisen.

2. Wischerblatt (1) nach Anspruch 1, wobei die Unterseite (7) der Wischlippe (3) nichtfluoriert ist.

3. Wischerblatt (1) nach Anspruch 1 oder 2, wobei das Verbindungselement (2) fluoriert ist.

4. Wischerblatt (1) nach einem der vorhergehenden Ansprüche, wobei mindestens eine Längsseite (4, 5) der Wischlippe (3) fluoriert ist und vorzugsweise beide Längsseiten (4, 5) der Wischlippe (3) fluoriert sind.

5. Wischerblatt (1) nach einem der vorhergehenden Ansprüche, wobei die fluorierten Bereiche der Oberfläche des Wischerblatts (1) eine Fluordichte von 150 µg/cm² (Mikrogramm pro Quadratzentimeter) bis 250 µg/cm² aufweisen.

6. Wischerblatt (1) nach einem der vorhergehenden Ansprüche, umfassend mindestens eine der folgenden Substanzen:
a) Ethylen-Propylen-Dien-Kautschuk (EPDM);
b) Styrol-Butadien-Kautschuk (SBR);
c) ein Polymer;
d) ein Netzwerkpolymer; und
e) einen hydrierten Acrylnitrilbutadien-Kautschuk (HNBR).

## Revendications

1. Balai d'essuie-glace (1) pour un essuie-glace, comprenant au moins :
- un élément de liaison (2) pour relier le balai d'essuie-glace (1) à un porte-balai d'essuie-glace, et
- une lèvre d'essuyage (3) possédant deux côtés longitudinaux (4, 5) et un côté supérieur (6) relié à l'élément de liaison (2) et une sous-face (7) qui, en fonctionnement, est entraînée sur une surface lisse,
la sous-face (7) de la lèvre d'essuyage (3) étant formée de façon opposée à l'élément de liaison (2), **caractérisé en ce qu'**au moins la lèvre d'essuyage (3) comporte, au moins partiellement, une surface fluorée, les régions fluorées comportant du fluor jusqu'à une profondeur de 5 nm à 15 nm.

2. Balai d'essuie-glace (1) selon la revendication 1, dans lequel la sous-face (7) de la lèvre d'essuyage (3) n'est pas fluorée.

3. Balai d'essuie-glace (1) selon la revendication 1 ou 2, dans lequel l'élément de liaison (2) est fluoré.

4. Balai d'essuie-glace (1) selon une quelconque des revendications précédentes, dans lequel au moins un côté longitudinal (4, 5) de la lèvre d'essuyage (3) est fluoré, et, de préférence, les deux côtés longitudinaux (4, 5) de la lèvre d'essuyage (3) sont fluorés.

5. Balai d'essuie-glace (1) selon une quelconque des revendications précédentes, dans lequel les régions fluorées de la surface du balai d'essuie-glace (1) possèdent une densité de fluorine de 150 µg/cm² (microgramme par centimètre carré) à 250 µg/cm².

6. Balai d'essuie-glace (1) selon une quelconque des revendications précédentes, comprenant au moins une des substances suivantes :
a) du caoutchouc éthylène-propylène-diène (EPDM) ;
b) du caoutchouc styrène-butadiène (SBR) ;
c) un polymère ;
d) un polymère réticulé ; et
e) un caoutchouc nitrile-butadiène hydrogéné (HNBR).
